# EUROPÄISCHE PATENTSCHRIFT

(11) **EP 2 021 642 B1**
(45) Veröffentlichungstag und Bekanntmachung des Hinweises auf die Patenterteilung: **20.04.2011**
(21) Anmeldenummer: 07722457.4
(22) Anmeldetag: 23.05.2007
(51) Int. Cl.: F16C 33/62, F16C 33/64

(54) **WÄLZLAGER**
ROLLER BEARING
PALIER À ROULEMENT

(30) Priorität: 26.05.2006 DE 102006024603
(43) Veröffentlichungstag der Anmeldung: 11.02.2009
(60) Teilanmeldung: 09014147.4
(73) Patentinhaber: Schaeffler Technologies GmbH & Co. KG, 91074 Herzogenaurach (DE)
(72) Erfinder: STREIT, Edgar, 97711 Poppenlauer (DE); BEER, Oskar, 84032 Landshut (DE)
(86) Internationale Anmeldenummer: PCT/DE2007/000933
(87) Internationale Veröffentlichungsnummer: WO 2007/137558

(56) Entgegenhaltungen:
- EP-A1- 1 225 353
- US-A- 5 593 234
- US-A1- 2004 116 242

## Beschreibung

### Gebiet der Erfindung

Die Erfindung liegt auf dem Gebiet der Hochleistungs-Wälzlager, insbesondere zur Anwendung bei Hauptwellenlagerungen in hochdrehenden Gasturbinen, Getrieben sowie beispielsweise für Rotorlagerungen in Hubschraubern.

Bei derartigen Einsatzfällen entstehen im Kontaktbereich zwischen den Wälzkörpern und den Lagerringen aufgrund der sehr hohen Betriebsdrehzahlen bei äußerst hohen Belastungen leicht Betriebstemperaturen von weit über 200°C. Die bei hohen Umdrehungszahlen durch die Reibleistung entstehende Wärme muss zur Vermeidung von Lagerschäden zuverlässig und zügig abgeführt werden. Zur Kühlung der Lager sind deshalb bisher relativ hohe Öldurchflussmengen erforderlich, die nur zu einem sehr geringen Anteil für die Lagerschmierung benötigt werden. Der weit überwiegende Anteil der Ölmenge dient der Wärmeableitung.

Bei vielen Einsatzfällen - beispielsweise in der Luftfahrt - müssen an die Betriebssicherheit und Zuverlässigkeit äußerst hohe Anforderungen gestellt werden. Die für den Öldurchfluss benötigten Aggregate, wie .z.B. Pumpen, Kühlaggregate und Sicherheitssysteme, müssen deshalb in der Regel redundant ausgeführt und hochzuverlässig ausgelegt sein. Dies schlägt sich sowohl in den Herstellungs- und Wartungskosten als auch im Gewicht der so ausgestatteten Systeme nieder.

Vor diesem Hintergrund besteht die Aufgabe der vorliegenden Erfindung darin, ein Wälzlager zu schaffen, das auch unter Minimalmengenschmierung hohe Drehzahlwerte und Betriebslasten erträgt. Unter Minimalmengenschmierung ist sowohl eine so genannte Notschmierung (d.h. eine in kritischen Schmiersituationen erheblich verringerte Schmiermittelversorgung oder nur noch ein vorhandener Schmiermittelnebel) als auch die bewusste Verringerung der Schmiermittelmenge zu verstehen. Damit besteht eine durch die Erfindung zu lösende besondere Problematik darin, die im Lager entstehende Wärme schnell und zuverlässig abzuführen und zugleich die Wärmeentstehung zu minimieren. Dabei müssen die Wälzlagerkomponenten so ausgelegt sein, dass sie selbst bei Betriebstemperaturen von über 300 °C im Kontaktbereich zwischen Lagerringen und Wälzlagerkörpern noch eine ausreichende Härte aufweisen.

Diese Aufgabe wird erfindungsgemäß gelöst durch ein Wälzlager mit einem Wälzlagerring, der aus einem Materialverbund besteht, wobei die erste Materialverbundkomponente die Laufbahn bildet und vorzugsweise aus einem Refraktärmetall oder einem Sinterwerkstoff besteht, vgl. z.B. EP-A-1 225 353, die dem Obergegriff des Anspruchs 1 entspricht. Die Erfindung nach Anspruch 1 zeichnet sich dem gegenüber dadurch aus, daß die erste Materialkomponente eine Wärmeleitfähigkeit und Warmfestigkeit aufweist die höher sind als die Wärmeleitfähigkeit und Warmfestigkeit der zumindest einen weiteren Materialverbundkomponente, die den Grundkörper des Wälzlagerrings bildet.

Ein wesentlicher Vorteil der Erfindung besteht darin, dass (funktional) verschiedene Bereiche des Lagerrings hinsichtlich funktionsspezifisch unterschiedlicher Anforderungen bezüglich Härte und Warmfestigkeit einerseits und Zähigkeit andererseits separat optimierbar sind. In dem Bereich, in dem der eigentliche Wälzkörperkontakt stattfindet (allgemein hier auch als Laufbahn bezeichnet) ist eine sehr hohe Härte und Warmfestigkeit gewünscht; für den übrigen Lagerkörper bzw. den so genannten Lagerrücken ist dagegen eine besonders hohe Zähigkeit wünschenswert. Die die Laufbahn bildende Materialverbundkomponente weist bevorzugt eine zulässige Dauerbetriebstemperatur von mehr als 300°C, eine Wärmeleitfähigkeit von mehr als 30 W/mK und eine hohe Verschleißfestigkeit zur Gewährleistung optimaler Überrolleigenschaften auf.

Im Rahmen der Erfindung wird ein Wälzlager geschaffen, an dessen Außen- und/oder Innenring Kühleinrichtungen zum Abtransport der entstehenden Wärme vorgesehen werden können. Als besonders vorteilhaft ist dabei zu erwähnen, dass eine erhöhte Wärmeabfuhr über die entsprechend optimierte Materialverbundkomponente im Bereich der Laufbahn sichergestellt und gleichzeitig eine erhöhte Wärmeaufnahme im Material möglich ist. Dadurch wird besonders bevorzugt die Anordnung eines Kühlsystems am Außenring ermöglicht.

Besonders geeignet als Materialverbundkomponente für die Laufbahn sind nach einer ersten Alternative der Erfindung sogenannte Refraktärmetalle, nämlich grundsätzlich die Metalle Molybdän, Wolfram, Niob und Tantal. Die beiden letzt genannten Refraktärmetalle sind - hinsichtlich ihrer Eigenschaften zur Verwendung in der vorliegenden Erfindung bestens geeignet, aber - relativ teuer. Eine bevorzugte Ausgestaltung der Erfindung sieht deshalb vor, dass die erste Materialverbundkomponente überwiegend aus Molybdän oder Wolfram besteht oder zumindest aber einen erheblichen Anteil (z.B. weit über 70 %) von Molybdän oder Wolfram aufweist.

Nach einer der beiden Alternativen der Erfindung werden als erste Materialverbundkomponente Hartmetalle in Form von Sinterwerkstoffen eingesetzt, besonders bevorzugt Karbide, die mit Kobalt und/oder Nickel als Bindemittel versintert sind.

Der dem Laufbahnbereich abgewandte Teil des erfindungsgemäßen Wälzlagers (allgemein auch als Lagerringrücken oder Grundkörper bezeichnet) ist nach der vorliegenden Erfindung vorteilhafterweise unabhängig in seinen Materialeigenschaften optimierbar. An den Grundkörper werden weniger hohe Anforderungen hinsichtlich der Härte und Verschleißfestigkeit gestellt, jedoch ist eine erheblich höhere Zähigkeit erwünscht. Dies gilt insbesondere für den inneren Lagerring eines Wälzlagers, der neben einer hohen Warmfestigkeit eine besonders hohe Zähigkeit aufweisen muss. Der innere Lagerring ist üblicherweise auf die drehende Welle aufgeschrumpft und steht deshalb unter erheblicher Zugvorspannung. Durch die bei den hohen Drehzahlen wirkenden erheblichen Fliehkräfte wird die Belastung auf den inneren Lagerring noch weiter verstärkt.

Nach einer vorteilhaften Ausgestaltung der Erfindung wird der Grundkörper ebenfalls aus einem Refraktärmaterial gebildet, das durch geeignete Legierung oder pulvermetallurgische Herstellung in Richtung auf die vorbeschriebenen Anforderungen optimiert wird. Besonders bevorzugt ist ein Werkstoff auf Molybdänbasis.

Vor dem Hintergrund der eingangs beschriebenen erheblichen betriebsgemäßen Belastungen ist es für besonders hohe Belastungsfälle mitunter nicht ausreichend, nur die Lagerringe in ihrem Betriebsverhalten und ihrer Dauerfestigkeit zu optimieren. In diesen Fällen besteht nämlich außerdem die Gefahr einer von den Wälzkörpern ausgehenden Ermüdung, die die gesamte Lagerzuverlässigkeit beeinträchtigen könnte. Deshalb ist nach einer vorteilhaften Ausgestaltung der Erfindung vorgesehen, dass die Wälzkörper aus keramischen Werkstoffen gebildet sind. Besonders bevorzugt können dabei Keramikwerkstoffe auf Basis von Siliziumnitrid verwendet werden.

Schließlich empfiehlt es sich für derartige Anwendungsfälle, auch den Wälzkörperkäfig entsprechend warmfest auszugestalten. Nach einer diesbezüglich vorteilhaften Fortbildung der Erfindung ist vorgesehen, dass ein Wälzkörperkäfig aus CFC verwendet wird. Darunter ist ein kohlenstofffaserverstärkter Werkstoff zu verstehen, bei dem auch die Matrix aus Kohlenstoffatomen besteht, in die in an sich bekannter Weise Kohlenstofffasern zur Verstärkung eingebracht sind.

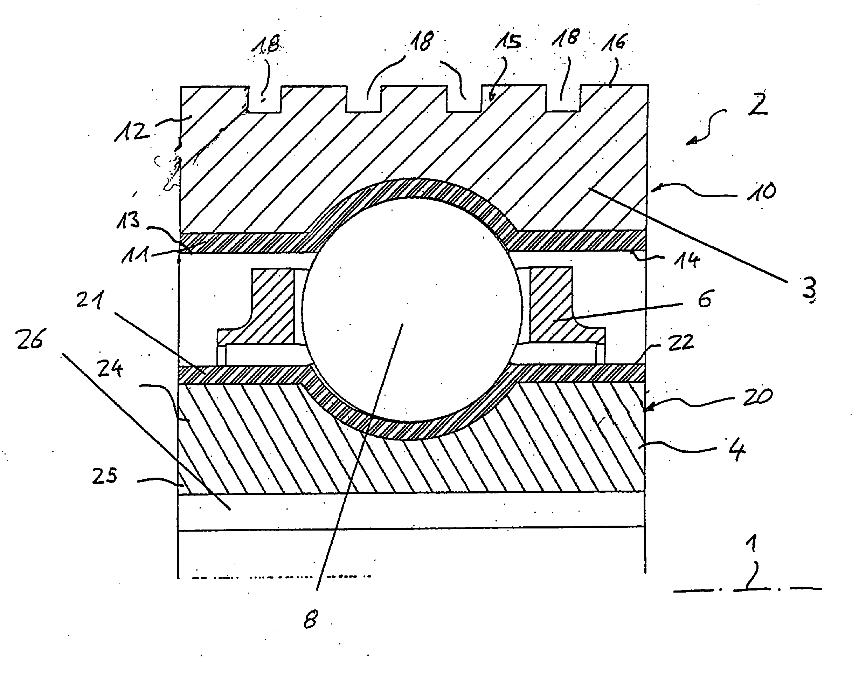

Ein Ausführungsbeispiel der Erfindung wird nachfolgend anhand der einzigen Figur der Zeichnung beschrieben.

Die Figur zeigt im Längsschnitt nur den oberen Bereich eines um die betriebsgemäße Rotationsachse 1 symmetrischen Wälzlagers 2. Das Wälzlager hat einen äußeren Lagerring 3 und einen inneren Lagerring 4. Zwischen den Lagerringen 3, 4 befinden sich in an sich bekannter Weise in einem Käfig 6 angeordnete Wälzkörper 8 - hier in Form von Lagerkugeln.

Der äußere Lagerring 3 ist aus einem Materialverbund 10 gebildet, der eine erste Materialverbundkomponente 11 und eine zweite Materialverbundkomponente 12 umfasst. Die erste Materialverbundkomponente 11 bildet die Laufbahn 13, auf deren Oberfläche 14 - der tatsächlichen Lauffläche - betriebsgemäß die Wälzkörper 8 (Lagerkugeln) abrollen. Diese Materialverbundkomponente 11 weist im Hinblick auf die hohen Lasten und Betriebstemperaturen, denen das erfindungsgemäße Wälzlager betriebsgemäß ausgesetzt ist, eine sehr hohe Warmfestigkeit von mehr als 300 C Dauertemperatur und eine hohe Wärmeleitfähigkeit von deutlich mehr als 30 W/mK auf. Die erste Materialverbundkomponente besteht z.B. aus einem Werkstoff auf Basis eines Refraktärmetalls, vorzugsweise Molybdän, das sich bekanntermaßen durch die Refraktärmetallen innewohnende Eigenschaft einer sehr hohen Schmelztemperatur auszeichnet oder aus einem karbidreichen Sintermaterial.

Die zweite Materialverbundkomponente 12 bildet außerhalb der Laufbahn den auch als Grundkörper 15 bezeichneten übrigen Teil des Lagerringes 10 und besteht im Ausführungsbeispiel ebenfalls aus einem Refraktärmetall auf Molybdänbasis, das jedoch weniger verfestigt ist und insoweit eine höhere Zähigkeit bei dennoch hoher Wärmeleitfähigkeit aufweist.

An der äußeren Mantelfläche 16 des Grundkörpers 15 sind mehrere Ausnehmungen 18 für den Durchfluss eines Kühlmittels eines nicht näher dargestellten Kühlmittelsystems vorgesehen. Damit wird in effektiver Weise die aufgrund der Reibleistung bei den außerordentlich hohen Umdrehungszahlen zwischen Wälzlagerring 10 und den Wälzkörpern 8 erzeugte Reibleistung abgeführt.

Der innere Lagerring 4 ist ebenfalls aus einem Materialverbund 20 gebildet, bei dem wie bereits beschrieben entsprechend eine erste Materialverbundkomponente 21 vorgesehen ist, die die innere Laufbahn 22 für die Wälzkörper 8 bildet. Der Materialverbund 20 weist einen Grundkörper 24 aus einer weiteren Materialverbundkomponente 25 auf, die wie vorstehend im Zusammenhang mit dem äußeren Lagerring 3 beschrieben optimiert ist. Ferner sind auch in dem inneren Lagerring Ausnehmungen 26 zum Kühlmitteldurchfluss und zur Kühlung des inneren Lagerringes 4 vorgesehen. Die Grundkörper 12 bzw. 24 des äußeren 3 bzw. inneren Lagerringes 4 können ebenfalls aus einem Refraktärmaterial auf Molybdänbasis gebildet sein.

Die Wälzkörper 8 sind vorzugsweise aus keramischen Werkstoffen gebildet und sind in einem Wälzkörperkäfig 6 gehalten, der aus kohlenstofffaserverstärktem Kohlenstoff (CFC) hergestellt ist.

Somit ist das Wälzlager hinsichtlich seines Festigkeits- und Temperaturverhaltens auf die in den unterschiedlichen Funktionsbereichen der Lagerringe 3, 4 herrschenden Betriebsanforderungen jeweils individuell optimierbar, indem nämlich die Laufbahnen und damit die mechanisch hochbelasteten Bereiche durch einen hochwarmfesten, sehr harten und verschleißbeständigen Werkstoff gebildet sind. Dieser ist jeweils durch die erste Materialverbundkomponente realisiert, während die im übrigen Bereichen der Lagerringe gewünschten thermischen und mechanischen Eigenschaften durch die Verwendung einer zweiten Materialverbundkomponente mit deutlich höherer Zähigkeit optimiert sind.

### Bezugszeichen

- 1: Rotationsachse
- 2: Wälzlager
- 3: äußerer Lagerring
- 4: innerer Lagerring
- 6: Wälzkörperkäfig
- 8: Wälzkörper
- 10: Materialverbund
- 11: erste Materialverbundkomponente
- 12: zweite Materialverbundkomponente
- 13: Laufbahn
- 14: Oberfläche
- 15: Grundkörper
- 16: äußere Mantelfläche
- 18: Ausnehmungen
- 20: Materialverbund
- 21: erste Materialverbundkomponente
- 22: innere Laufbahn
- 24: Grundkörper
- 25: weitere Materialverbundkomponente
- 26: Ausnehmungen

## Patentansprüche

1. Wälzlager mit einem Wälzlagerring (2), der aus einem Materialverbund (10) besteht, wobei die erste Materialverbundkomponente (11) die Laufbahn (13) bildet und aus einem Refraktärmetall oder einem Sinterwerkstoff besteht, dessen Wärmeleitfähigkeit und Warmfestigkeit höher sind als die Wärmeleitfähigkeit und Warmfestigkeit der zumindest einen weiteren Materialverbundkomponente (12), die den Grundkörper (15) des Wälzlagerrings (2) bildet.

2. Wälzlager nach Anspruch 1, wobei die erste Materialverbundkomponente (10) als wesentlichen Bestandteil Molybdän oder Wolfram enthält.

3. Wälzlager nach Anspruch 1, wobei die erste Materialverbundkomponente (10) aus mittels Kobalt und/oder Nickel versinterten Karbiden besteht.

4. Wälzlager nach einem der vorangehenden Ansprüche, wobei der Grundkörper (15) aus einem Refraktärmetall gebildet ist.

5. Wälzlager nach Anspruch 4, wobei der Grundkörper (15) aus einem Refraktärmetall auf Molybdänbasis gebildet ist.

6. Wälzlager nach einem der vorangehenden Ansprüche, wobei die Wälzkörper (8) aus keramischen Werkstoffen gebildet sind.

7. Wälzlager nach einem der vorangehenden Ansprüche, wobei ein Wälzkörperkäfig (6) aus siliziertem CFC vorgesehen ist.

## Claims

1. Roller bearing having a roller bearing ring (2) which is composed of a material composite (10), wherein the first material composite component (11) forms the running track (13) and is composed of a refractory metal or a sintered material whose thermal conductivity and heat resistance are higher than the thermal conductivity and heat resistance of the at least one further material composite component (12) which forms the base body (15) of the roller bearing ring (2).

2. Roller bearing according to Claim 1, wherein the first material composite component (10) contains molybdenum or tungsten as the main component.

3. Roller bearing according to Claim 1, wherein the first material composite component (10) is composed of cobalt and/or nickel-sintered carbides.

4. Roller bearing according to one of the preceding claims, wherein the base body (15) is formed from a refractory metal.

5. Roller bearing according to Claim 4, wherein the base body (15) is formed from a refractory metal based on molybdenum.

6. Roller bearing according to one of the preceding claims, wherein the roller bodies (8) are formed from ceramic materials.

7. Roller bearing according to one of the preceding claims, wherein a roller body cage (6) made of siliconized CFC is provided.

## Revendications

1. Palier de roulement doté d'une bague (2) de palier de roulement constitué d'un matériau composite (10), le premier composant (11) du matériau composite formant la piste de roulement (13) et étant constitué d'un métal réfractaire ou d'un matériau fritté dont la conductivité thermique et la tenue à la chaleur sont supérieures à la conductivité thermique et à la tenue à la chaleur du ou des autres composants (12) du matériau composite qui forment le corps de base (15) de la bague (2) de palier de roulement.

2. Palier de roulement selon la revendication 1, dans lequel le premier composant (10) du matériau composite contient comme composant essentiel le molybdène ou le tungstène.

3. Palier de roulement selon la revendication 1, dans lequel le premier composant (10) du matériau composite est constitué de carbures frittés à l'aide de cobalt et/ou de nickel.

4. Palier de roulement selon l'une des revendications précédentes, dans lequel le corps de base (15) est formé d'un métal réfractaire.

5. Palier de roulement selon la revendication 4, dans lequel le corps de base (15) est formé de métal réfractaire à base de molybdène.

6. Palier de roulement selon l'une des revendications précédentes, dans lequel les corps de roulement (8) sont formés de matériaux céramiques.

7. Palier de roulement selon l'une des revendications précédentes, qui présente pour les corps de roulement une cage (6) en CFC silicié.
